# EUROPÄISCHE PATENTANMELDUNG

(11) **EP 2 218 923 A2**
(43) Veröffentlichungstag der Anmeldung: **18.08.2010**
(21) Anmeldenummer: 10151493.3
(22) Anmeldetag: 25.01.2010
(51) Int. Cl.: F16B 37/04

(54) **Befestigungsvorrichtung zur Anordnung eines Stangenelementes an einer Montageschiene**

(30) Priorität: 10.02.2009 DE 102009000736
(71) Anmelder: HILTI Aktiengesellschaft, 9494 Schaan (LI)
(72) Erfinder: Rass, Franz, 6372, Oberndorf/T. (AT); Mugg, Peter, 6714, Nüziders (AT); Merhar, Thomas, 9494, Schaan (LI); Wörgartner, Peter, 6372, Oberndorf/T. (AT)

(57) **Zusammenfassung**

Die Erfindung betrifft eine Befestigungsvorrichtung (21) zur Anordnung eines Stangenelementes (9) an einer Montageschiene mit einem Hintergreifteil (22) zum Einführen und Hintergreifen von Rändern einer Montageöffnung der Montageschiene, wobei das Hintergreifteil (22) eine mit einem Innengewinde versehene Öffnung (25) für das Stangenelement aufweist, mit einer Anschlagplatte (42) zur aussenseitigen Anlage an der Montageschiene, die eine Durchführöffnung (44) zur Durchführung des Stangenelementes (9) aufweist, und mit flexiblen Verbindungselementen (32), welche das Hintergreifteil (22) mit der Anschlagplatte (42; 76; 96) in einem Abstand zueinander verbinden. Weiter ist ein Mutterelement (52) mit einer ein Innengewinde aufweisenden Durchgangsöffnung (53) zur Verspannung des Stangenelementes (9) an der Montageschiene über eine Halteeinrichtung (62) drehbar an der Anschlagplatte (42) gehalten.

## Beschreibung

Die Erfindung betrifft eine Befestigungsvorrichtung zur Anordnung eines Stangenelementes an einer Montageschiene, der im Oberbegriff des Patentanspruchs 1 genannten Art.

Im Gebiet der Haustechnik werden Schienensysteme eingesetzt, an denen Leitungen z. B. für Wasser-, Heizung-, Lüftung-, Klima- und/oder Elektroinstallationen einfach über entsprechende Befestigungsvorrichtungen, wie beispielsweise mit Rohrschellen und Schienenmuttern festlegbar sind. An Schienensystemen werden auch Vorrichtungen zur Abhängung von Bauteilen vorgesehen, deren Stangenelemente ebenfalls mit geeigneten Befestigungsvorrichtungen an den Schienensystemen festlegbar sind.

Für ein solches Schienensystem wird oftmals eine so genannte C-förmige Montageschiene verwendet, wie sie beispielsweise aus der DE 87 15 256 U1 bekannt ist. Der von der Montageschiene umschlossene Innenraum ist über eine entlang der Längserstreckung der Montageschiene verlaufende Montageöffnung von aussen her zugänglich, welche von Rändern seitlich begrenzt ist. Die Montageöffnung weist eine quer zu der Längserstreckung der Montageschiene verlaufende lichte Breite auf, die kleiner als die entsprechende Innenabmessung des Innenraums der Montageschiene ist.

Aus der DE 44 21 252 A1 ist eine Befestigungsvorrichtung zur Anordnung eines Stangenelementes, das zumindest bereichsweise ein Gewinde aufweist, an einer Montageschiene bekannt. Die Befestigungsvorrichtung weist ein Hintergreifteil zum Einführen und Hintergreifen von Rändern der Montageöffnung der Montageschiene, wobei das Hintergreifteil eine mit einem Innengewinde versehene Öffnung für das Stangenelementes aufweist, eine Anschlagplatte zur aussenseitigen Anlage an der Montageschiene, die eine Durchführöffnung zur Durchführung des Stangenelementes aufweist, und ein flexibles Verbindungselement auf, welches das Hintergreifteil mit der Anschlagplatte in einem Abstand zueinander verbindet. Das Hintergreifteil weist eine Breite, die kleiner als die lichte Breite der Montageöffnung ist, und eine Länge auf, die grösser als die lichte Breite der Montageöffnung ist.

Für die Anordnung des Stangenelementes, wie beispielsweise eine Gewindestange, an der Montageschiene wird zuerst eine Mutter, wie eine Sechskantmutter, als Mutterelement ausreichend weit auf das Gewinde des Stangenelementes aufgeschraubt, damit dieser Abschnitt des Stangenelementes noch in dem Innengewinde des Hintergreifteils festlegbar ist. Anschliessend wird dieser Abschnitt des Stangenelementes mit dem Gewinde durch die Durchführöffnung in der Anschlagplatte hindurchgeführt und in die Öffnung des Hintergreifteils eingeschraubt. Nach dem Einführen des Hintergreifteils durch die Montageöffnung hindurch in die Montageschiene wird das Hintergreifteil durch Drehen der Befestigungsvorrichtung beziehungsweise des Stangenelementes im Innenraum der Montageschiene verdreht und somit in eine Stellung zum Hintergreifen der Ränder der Montageöffnung gebracht. In dieser Stellung des Hintergreifteils wird die vorgängig an dem Stangenelement aufgeschraubte Mutter in Richtung der Anschlagplatte geschraubt, wobei das Hintergreifteil nach Anlage der Mutter an der Anschlagplatte in Richtung der Anschlagplatte versetzt wird, bis die Befestigungsvorrichtung lösbar an der Montageschiene verspannt ist. Das flexible Verbindungselement wird beim Verspannvorgang verformt, wodurch sich der Abstand des Hintergreifteils zur Anschlagplatte bis zur Anlage des Hintergreifteils an den Rändern der Montageöffnung reduziert.

Aufgabe der Erfindung ist es, die bekannte Befestigungsvorrichtung dahingehend zu verbessern, dass diese mit weniger Einzelteilen handhabbar ist.

Die Aufgabe ist durch die Merkmale des unabhängigen Anspruchs gelöst. Vorteilhafte Weiterbildungen sind in den Unteransprüchen dargelegt.

Gemäss der Erfindung ist ein Mutterelement mit einer ein Innengewinde aufweisenden Durchgangsöffnung zur Verspannung des Stangenelementes an der Montageschiene über eine Halteeinrichtung drehbar an der Anschlagplatte gehalten.

Das Gewinde im Mutterelement und das Gewinde in der Öffnung des Hintergreifteils weisen beide die gleiche Gewindesteigung auf. Durch das direkt an der Anschlagplatte angeordnete Mutterelement erübrigt sich ein vorgängiges Anordnen desselben an dem Stangenelement. Das Mutterelement und das Hintergreifteil werden gleichzeitig an dem Stangeelement angeordnet, womit der Aufwand für die Montage und der damit erforderliche Zeitbedarf gegenüber den bekannten Lösungen massgeblich reduziert ist. Somit kann das Mutterelement nicht verloren gehen oder vergessen werden. Wurde bis anhin die vorgängige Anordnung der Mutter an dem Stangenelement vergessen, musste das Stangenelement demontiert oder die Mutter mühsam über das freie Ende des Stangenelementes und somit über die nahezu gesamte Längserstreckung des Stangenelementes nachträglich geschraubt werden. Mit der erfindungsgemässen Befestigungsvorrichtung ist eine einfachere Erstellung der Befestigung gegeben. Es müssen weniger einzelne Teile zur Montage der Schellenanbindung oder Abhängung durch den Anwender mitgeführt werden, wobei die erfindungsgemässe Befestigungsvorrichtung wirtschaftlich herstellbar ist.

Vorzugsweise ist das Mutterelement relativ zu der Anschlagplatte begrenzt verschiebbar an der Anschlagplatte gehalten, womit sich beim Anordnen des Stangenelementes an der Befestigungsanordnung die beiden Gewinde im Mutterelement und im Hintergreifteil finden können. Vorteilhaft beträgt die Verschiebbarkeit des Mutterelementes relativ zu der Anschlagplatte eine bis drei Steigungshöhen des Innengewindes im Mutterelement.

Bevorzugt ist an einem dem Mutterelement zugewandten Abschnitt der Halteeinrichtung zumindest ein Klemmabschnitt zum lösbaren Halten des Mutterelementes an der Anschlagplatte vorgesehen, womit eine Hemmung zwischen dem Mutterelement und der Anschlagplatte erzeugt wird, welche ein Mitdrehen des Mutterelementes beim Eindrehen des Stangenelementes in die Befestigungsvorrichtung verhindert und somit ein einfaches Handling der Befestigungsvorrichtung gewährleistet. Die Höhe des zumindest einen Klemmabschnitts entspricht vorteilhaft zumindest der Steigungshöhe eines Gewindegangs. Alternativ oder ergänzend dazu wird ein Hemmmittel, wie eine Beschichtung oder ein separates, z. B. elastisches Element zwischen dem Mutterelement und der Anschlagplatte vorgesehen werden, welches eine erst bei einem vorbestimmten Drehmoment überwindbare Reibung zwischen diesen Teilen erzeugt.

Vorzugsweise ist eine mit einer Aussenkontur des Mutterelementes in Anlage bringbare Profilierung an einem freien Rand der Halteeinrichtung vorgesehen, welche beispielsweise mehrere zueinander beabstandete Nasen umfasst. Bei einem Mutterelement mit einer Sechskant-Aussenkontur als Drehangriffsmittel, greift die Profilierung beispielsweise an den Ecken dieser Aussenkontur an und stellt somit eine ausreichende Hemmung des Mutterelementes bei der Anordnung der Befestigungsvorrichtung an dem Stangenelement sicher.

Bevorzugt weist das Mutterelement einen aussenseitig umlaufenden Bund auf, wobei die Halteeinrichtung vorteilhaft an dem Bund angreift. Besonders vorteilhaft ist das Mutterelement als so genannte Hutmutter ausgebildet, welche als Massenprodukt günstig zur Verfügung steht und somit eine wirtschaftliche Herstellung der Befestigungsvorrichtung gewährleistet.

Vorzugsweise umfasst die Halteeinrichtung mehrere Laschen zum bereichsweisen Umgreifen des Mutterelementes, was eine einfach lösbare Halterung des Mutterelementes an der Anschlagplatte sowie eine wirtschaftliche Herstellung der Befestigungsvorrichtung ermöglicht.

Bevorzugt ist die Halteeinrichtung aus einem Federstahl gefertigt, welche eine ausreichende Haltekraft auf das Mutterelement ausübt. Zudem gewährleistet die Halteeinrichtung aus Federstahl aufgrund ihrer Elastizität eine ausreichend grosse axiale Verschieblichkeit des Mutterelementes zur Anordnung des Stangenelementes an der Befestigungsvorrichtung. Diese Halteeinrichtung ist vorteilhaft in einem Stanz-/Biegeverfahren hergestellt.

Alternativ ist die Halteeinrichtung aus einem Kunststoff gefertigt, welcher aufgrund seiner Materialeigenschaften eine ausreichende Haltekraft auf das Mutterelement ausüben kann. Zudem gewährleistet die Halteeinrichtung aus Kunststoff entsprechend ihrer Elastizitätseigenschaften eine ausreichend grosse axiale Verschieblichkeit des Mutterelementes zur Anordnung des Stangenelementes an der Befestigungsvorrichtung. Diese Halteeinrichtung ist vorteilhaft in einem Spritz-/Gussverfahren hergestellt.

Vorzugsweise sind das flexible Verbindungselement und die Halteeinrichtung einteilig ausgebildet, was eine einfache Fertigung der Befestigungsvorrichtung ermöglicht. In der Anschlagplatte werden vorteilhaft zumindest eine durchgehende Öffnung vorgesehen, durch welche der zumindest eine Abschnitt des flexiblen Verbindungselementes mit der Halteeinrichtung hindurchführbar ist. Das flexible Verbindungselement und die Halteeinrichtung sind aus einem Material oder mehreren, miteinander verbundenen Materialien beispielsweise in einem Spritz-/Gussverfahren hergestellt.

Alternativ sind die Anschlagplatte und die Halteeinrichtung einteilig ausgebildet, was eine einfache Fertigung der Befestigungsvorrichtung ermöglicht. Die Halteeinrichtung wird beispielsweise aus teilgestanzten Abschnitten der Anschlagplatte geformt. Vorteilhaft ist die Anschlagplatte mit der Halteeinrichtung in einem Stanz-/Biegeverfahren hergestellt

Die Erfindung wird nachstehend anhand von Ausführungsbeispielen näher erläutert. Es zeigen:
- Fig. 1: Drei an einer Montageschiene angeordnete Ausführungsbeispiele einer Befestigungsvorrichtung in einer Perspektive;
- Fig. 2: das erste Ausführungsbeispiel einer Befestigungsvorrichtung im Grundriss;
- Fig. 3: die in Fig. 2 dargestellte Befestigungsvorrichtung in einer Seitenansicht;
- Fig. 4: das Mutterelement mit Halteeinrichtung im Detailschnitt;
- Fig. 5: das zweite Ausführungsbeispiel einer Befestigungsvorrichtung im Grundriss;
- Fig. 6: die in Fig. 5 dargestellte Befestigungsvorrichtung in einer perspektivischen Detailansicht;
- Fig. 7: das dritte Ausführungsbeispiel einer Befestigungsvorrichtung im Grundriss; und
- Fig. 8: die in Fig. 5 dargestellte Befestigungsvorrichtung in einer Detailansicht.

Grundsätzlich sind in den Figuren gleiche Teile mit den gleichen Bezugszeichen versehen.

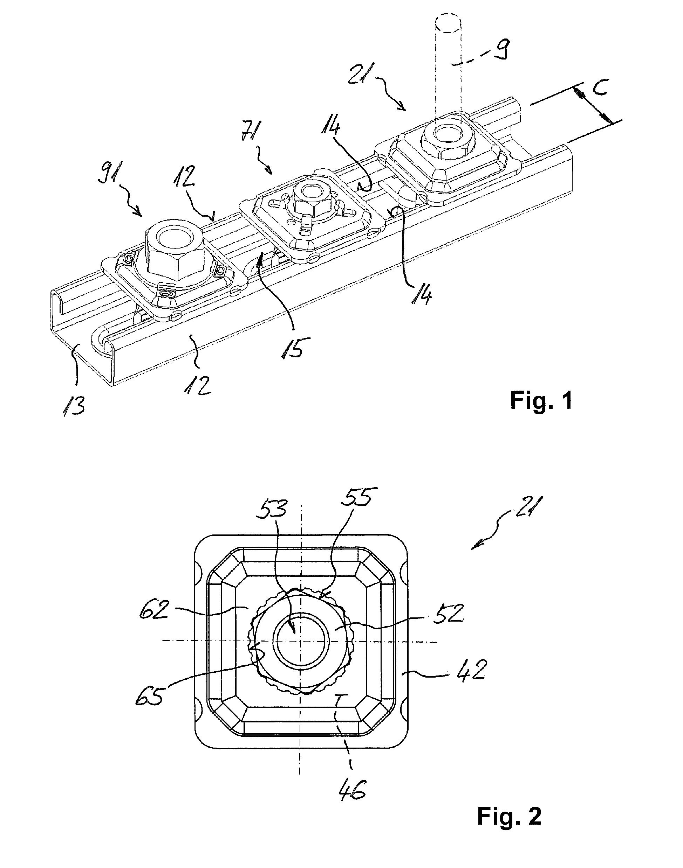

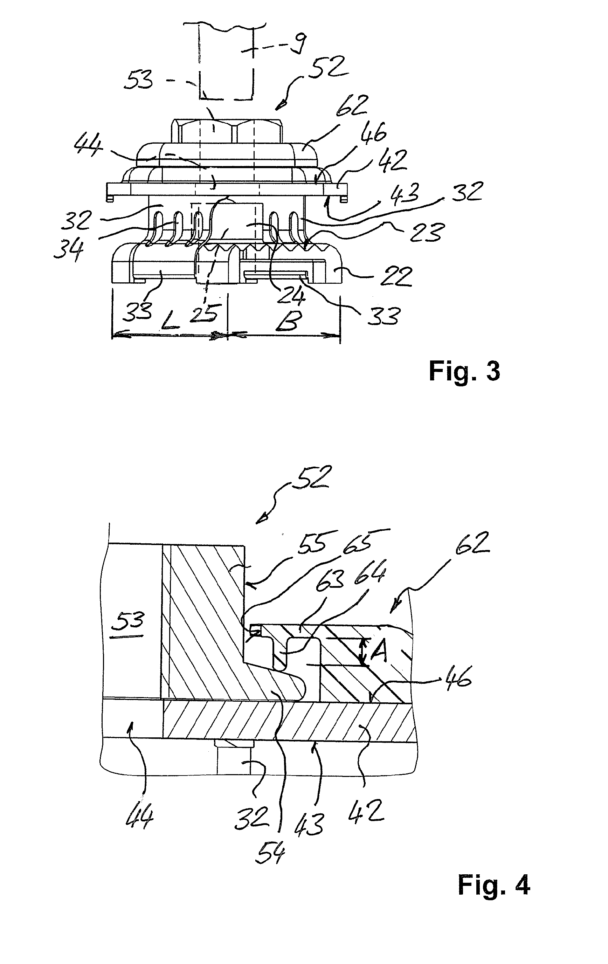

Die in den Figuren 1 bis 4 dargestellte Befestigungsvorrichtung 21 dient der Anordnung eines Stangenelementes 9, wie eine Gewindestange, an einer Montageschiene 11.

Die Montageschiene 11 weist zwei einander gegenüberliegende Seitenwände 12, eine diese Seitenwände 12 verbindende Rückwand 13 sowie dieser Rückwand 13 gegenüberliegend eine von Rändern 14 begrenzte, in der Längserstreckung der Montageschiene 11 verlaufende Montageöffnung 15 auf. Die Montageöffnung 15 weist eine quer zu der Längserstreckung der Montageschiene 11 verlaufende lichte Breite C auf, welche durch die nach innen umgebogenen freien Enden der Ränder 14 definiert ist. Die Montageschiene 11 umgibt einen Innenraum, der durch die Montageöffnung 15 von aussen her zugänglich ist.

Die Befestigungsvorrichtung 21 weist ein Hintergreifteil 22 mit einer Breite B, die kleiner als die lichte Breite C der Montageöffnung 15 in der Montageschiene 11 ist, und eine Länge L auf, die grösser als die lichte Breite C der Montageöffnung 15 in der Montageschiene 11 ist. An seinen Spannflächen 23 ist das Hintergreifteil 22 mit Zahnungen für einen verbesserten Eingriff mit den optional ebenfalls mit einer Zahnung versehenen freien Enden der Ränder 14 der Montageöffnung 15 versehen. Von der Seite des Hintergreifteils 22 mit den Spannflächen 23 ragt ein Hülsenabschnitt 24 ab, der eine mit einem Innengewinde versehene Öffnung 25 für das Stangenelement 9 an dem Hintergreifteil 22 ausbildet. Die Öffnung 25 ist vorteilhaft durchgängig ausgebildet, was eine Justierbarkeit des Stangenelementes 9 über einen grossen Bereich in Richtung seiner Längserstreckung ermöglicht.

Weiter umfasst die Befestigungsvorrichtung 21 eine Anschlagplatte 42, die bei der Anordnung der Befestigungsvorrichtung 21 an der Montageschiene 11 mit ihrer Anlageseite 43 mit der, der Montageöffnung 15 benachbarten Aussenseite der Montageschiene 11 in Anlage kommt und diese somit stirnseitig beaufschlagt. Der Anlageseite 43 gegenüberliegend weist die Anschlagplatte 42 eine Spannfläche 46 auf. Die Anschlagplatte 42 ist weiter mit einer Durchführöffnung 44 zur Durchführung des Stangenelementes 9 versehen, wobei das Stangenelement 9 frei drehbar in dieser Durchführöffnung 44 ist.

Das Hintergreifteil 22 ist über zwei einander gegenüberliegende flexible Verbindungselemente 32 verbunden, welche das Hintergreifteil 22 mit der Anschlagplatte 42 in einem Abstand zueinander verbinden. Die Verbindungselemente 32 stellen einen ausreichend grossen Abstand zwischen dem Hintergreifteil 22 und der Anschlagplatte 52 sicher, um das Hintergreifteil 22 in die Montageschiene 11 einführen und in eine Stellung zum Hintergreifen der Ränder 14 der Montageschiene 11 verdrehen zu können. Jedes Verbindungselement 32 weist einen Umgreifabschnitt 33 zum bereichsweisen Umgreifen des Hintergreifteils 22 auf. Ein gegenüberliegender Abschnitt der Verbindungselemente 32 ist jeweils direkt an der Anschlagplatte 42 festgelegt. Die Verbindungselemente 32 sind aus einem Blechteil in einem Stanz-Biegeverfahren gefertigt und weisen jeweils mehrere Ausnehmungen 34 zur Erhöhung ihrer Verformbarkeit auf.

An der Anschlagplatte 42 ist über eine Halteeinrichtung 62 ein Mutterelement 52 mit einer ein Innengewinde aufweisenden Durchgangsöffnung 53 zur Verspannung des Stangenelementes 9 an der Montageschiene 11 drehbar gehalten. Das Mutterelement 52 ist zudem bis zu dem Betrag von zwei Steigungshöhen des Innengewindes der Durchgangsöffnung 53 relativ zu der Anschlagplatte 42 begrenzt verschiebbar. Das Mutterelement 52 ist als Hutmutter ausgebildet und weist einen aussenseitig umlaufenden Bund 54 auf.

Die in diesem Beispiel aus einem Kunststoff gefertigte Halteeinrichtung 62 ist direkt an der Anschlagplatte 42 festgelegt und mit den Verbindungselementen 32 verbunden. Die Halteeinrichtung 62 umgreift den Bund 54 des Mutterelementes 52 über deren gesamten Umfang mit einem der Aussenkontur 55 zugewandten Abschnitt 63, der zu einer Aussenseite des Bundes 54, entgegen einer Einführrichtung des Stangenelementes 9 beabstandet ist. Der Abstand A zwischen dem Abschnitt 63 und der Aussenseite des Bundes 54 beträgt eine Steigungshöhe des Innengewindes in der Durchgangsöffnung 53 des Mutterelementes 52.

An dem dem Mutterelement zugewandten Abschnitt 63 der Halteeinrichtung 62 sind umfänglich verteilt mehrere Klemmabschnitte 64 zum lösbaren Halten des Mutterelementes 52 an der Anschlagplatte 42 vorgesehen, die sich im unverspannten Zustand der Befestigungsvorrichtung 21 bis zu der Aussenseite des Bundes 54 des Mutterelementes 52 erstrecken, die dem Abschnitt 63 der Halteeinrichtung 62 zugewandt ist. Weiter weist ein freier Rand 65 der Halteeinrichtung 62 eine mit der Aussenkontur 55 des Mutterelementes 52 in Anlage bringbare Profilierung auf.

In einem ersten Schritt wird die Befestigungsvorrichtung 21 auf ein Ende des Stangenelementes 9 aufgeschraubt, das mit einem Aussengewinde versehen ist, wobei das Stangenelement 9 in das Mutterelement 52 eindringt. Beim weiteren Aufschrauben durchdringt dieses Ende des Stangenelementes 9 die Durchführöffnung 44 in der Anschlagplatte 42 und kommt dann mit dem Innengewinde in der Öffnung 25 im Hintergreifteil 22 in Eingriff. Infolge der begrenzten axialen Versetzbarkeit des Mutterelementes 52 und/oder des Hintergreifteils 22 können sich die Gewinde des Stangenelementes 9 und des Hintergreifteils 22 finden. Aufgrund der Selbsthemmung des Mutterelementes 52 an der Anschlagplatte 42 wird ein Mitdrehen derselben während diesem Montageschritt verhindert. Dann wird das Hintergreifteil 22 in die Montageschiene 11 eingeführt und in die Stellung zum Hintergreifen der Ränder 14 der Montageöffnung 15 verdreht. Durch Drehen des Mutterelementes 52 über die als Drehangriffsmittel dienende Aussenkontur 55 wird das Hintergreifteil 22 in Richtung der Anschlagplatte 42 versetzt, bis das Hintergreifteil 22 an den Rändern 14 der Montageschiene 11 anliegt und die Befestigungsvorrichtung 21 verspannt ist. Beim Überschreiten eines vordefinierten Drehmomentes wird die Selbsthemmung des Mutterelementes 52 an der Anschlagplatte 42 aufgehoben.

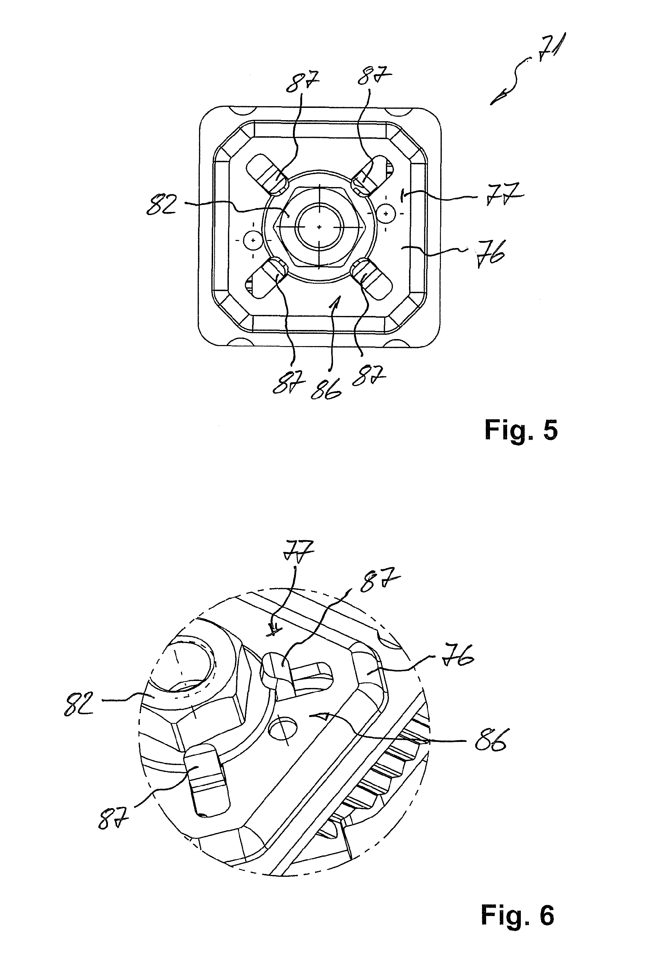

Die in den Figuren 1, 5 und 6 dargestellte Befestigungsvorrichtung 71 weist im Unterschied zur zuvor beschriebenen Befestigungsvorrichtung 21 als Halteeinrichtung 86 vier Laschen 87 zum bereichsweisen Umgreifen des Mutterelementes 82 auf, die einteilig mit der Anschlagplatte 76 ausgebildet sind und welche die Spannfläche 77 der Anschlagplatte 76 mit ihren freien Enden überragen.

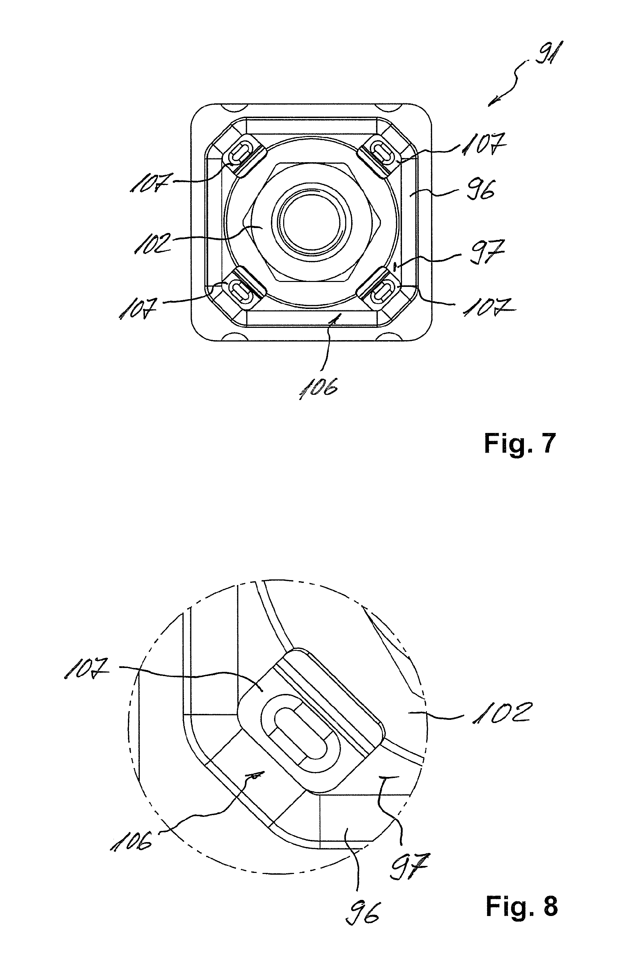

Die in den Figuren 1, 7 und 8 dargestellte Befestigungsvorrichtung 91 weist im Unterschied zur zuvor beschriebenen Befestigungsvorrichtung 21 als Halteeinrichtung 106 vier Z-förmige Laschen 107 aus Federstahl auf, die an der Spannfläche 97 der Anschlagplatte 96 formschlüssig, z. B. gelötet oder geklebt, festgelegt sind und mit ihren freien Enden das Mutterelement 102 bereichsweise umgreifen.

## Patentansprüche

1. Befestigungsvorrichtung zur Anordnung eines Stangenelementes (9), das zumindest bereichsweise ein Gewinde aufweist, an einer Montageschiene (11) mit einem Hintergreifteil (22) zum Einführen und Hintergreifen von Rändern (14) einer Montageöffnung (15) der Montageschiene (11), wobei das Hintergreifteil (22) eine mit einem Innengewinde versehene Öffnung (25) für das Stangenelement (9) aufweist,
mit einer Anschlagplatte (42; 76; 96) zur aussenseitigen Anlage an der Montageschiene (11), die eine Durchführöffnung (44) zur Durchführung des Stangenelementes (9) aufweist, und
mit zumindest einem flexiblen Verbindungselement (32), welches das Hintergreifteil (22) mit der Anschlagplatte (42; 76; 96) in einem Abstand zueinander verbindet, **dadurch gekennzeichnet, dass**
ein Mutterelement (52; 82; 102) mit einer ein Innengewinde aufweisenden Durchgangsöffnung (53) zur Verspannung des Stangenelementes (9) an der Montageschiene (11) über eine Halteeinrichtung (62; 86; 106) drehbar an der Anschlagplatte (42; 76; 96) gehalten ist.

2. Befestigungsvorrichtung nach Anspruch 1, **dadurch gekennzeichnet, dass** das Mutterelement (52; 82; 102) relativ zu der Anschlagplatte (42; 76; 96) begrenzt verschiebbar an der Anschlagplatte (42; 76; 96) gehalten ist.

3. Befestigungsvorrichtung nach Anspruch 1 oder 2, **dadurch gekennzeichnet, dass** an einem dem Mutterelement (52) zugewandten Abschnitt (63) der Halteeinrichtung (62) zumindest ein Klemmabschnitt (64) zum lösbaren Halten des Mutterelementes (52) an der Anschlagplatte (42) vorgesehen ist.

4. Befestigungsvorrichtung nach einem der Ansprüche 1 bis 3, **dadurch gekennzeichnet, dass** eine mit einer Aussenkontur (55) des Mutterelementes (52) in Anlage bringbare Profilierung an einem freien Rand (65) der Halteeinrichtung (62) vorgesehen ist.

5. Befestigungsvorrichtung nach einem der Ansprüche 1 bis 4, **dadurch gekennzeichnet, dass** das Mutterelement (52; 82; 102) einen aussenseitig umlaufenden Bund (54) aufweist.

6. Befestigungsvorrichtung nach einem der Ansprüche 1 bis 5, **dadurch gekennzeichnet, dass** die Halteeinrichtung (86; 106) mehrere Laschen (87; 107) zum bereichsweisen Umgreifen des Mutterelementes (82; 102) umfasst.

7. Befestigungsvorrichtung nach einem der Ansprüche 1 bis 6, **dadurch gekennzeichnet, dass** die Halteeinrichtung (106) aus einem Federstahl gefertigt ist.

8. Befestigungsvorrichtung nach einem der Ansprüche 1 bis 6, **dadurch gekennzeichnet, dass** die Halteeinrichtung (62) aus einem Kunststoff gefertigt ist.

9. Befestigungsvorrichtung nach einem der Ansprüche 1 bis 8, **dadurch gekennzeichnet, dass** das flexible Verbindungselement (32) und die Halteeinrichtung (62) einteilig ausgebildet sind.

10. Befestigungsvorrichtung nach einem der Ansprüche 1 bis 8, **dadurch gekennzeichnet, dass** die Anschlagplatte (76) und die Halteeinrichtung (86) einteilig ausgebildet sind.
